**Europäisches Patentamt**

**European Patent Office**

**Office européen des brevets**

(11) Veröffentlichungsnummer: **0 043 529**
**B1**

(12) # EUROPÄISCHE PATENTSCHRIFT

(45) Veröffentlichungstag der Patentschrift:
**23.01.85**

(51) Int. Cl.⁴: **B 60 N 1/04**

(21) Anmeldenummer: **81105006.1**

(22) Anmeldetag: **27.06.81**

(54) Fahrzeugsitz, insbesondere Klappsitz für landwirtschaftliche Fahrzeuge.

(30) Priorität: **05.07.80 DE 3025529**
**10.04.81 DE 3114576**

(43) Veröffentlichungstag der Anmeldung:
**13.01.82 Patentblatt 82/2**

(45) Bekanntmachung des Hinweises auf die Patenterteilung:
**23.01.85 Patentblatt 85/4**

(84) Benannte Vertragsstaaten:
**AT DE FR GB IT SE**

(56) Entgegenhaltungen:
**DE - A - 2 135 988**
**DE - A - 2 159 689**
**FR - A - 360 231**
**US - A - 1 355 005**
**US - A - 1 395 757**
**US - A - 2 235 751**

(73) Patentinhaber: **DEERE & COMPANY, 1 John Deere Road, Moline Illinois 61265 (US)**

(72) Erfinder: **Teich, Michael, Meerfeldstrasse 22, D-6800 Mannheim 1 (DE)**
Erfinder: **Nobis, Dieter, Waldhofstrasse 204, D-6800 Mannheim 1 (DE)**

(74) Vertreter: **Feldmann, Bernhard et al, DEERE & COMPANY European Office, Patent Department Steubenstrasse 36-42 Postfach 503, D-6800 Mannheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung bezieht sich auf einen Fahrzeugsitz, insbesondere für landwirtschaftliche Fahrzeuge, mit einer fahrzeugfesten Stange, die den Sitzträger in mit diesem verbundenen Führungsgliedern führt, um die der Sitzträger aus seiner waagerechten Stellung in eine senkrechte Stellung klappbar ist und die den Sitzträger in seiner waagerechten und gegen Klappen in die senkrechte Stellung gesicherten Stellung teilweise abstützt.

Ein in Nichtgebrauchslage wegschwenkbarer Beifahrersitz (DE-A-2 159 689) besteht aus einem mehrteiligen mit Scharnieren verbundenen Gestänge, das durch kettenartige Verbindungen bzw. Schlaufen in Gebrauchs- bzw. Nichtgebrauchslage gehalten werden soll. Diese Konstruktion besitzt zwar die Möglichkeit, durch Umhängen der Verbindungsketten die Benutzungsrichtung des Sitzes zu ändern, Ansonsten genügt die Konstruktion jedoch den heute bestehenden Sicherheitserfordernissen nicht, zumal die wenig zutreffend als Haltemittel bezeichneten Verbindungsketten keine eigentliche Arretierung in einer genau fixierten Lage ermöglichen.

Bei dem bekannten Fahrzeugsitz (US-A-1 395 757), von dem die Erfindung ausgeht, muß der Sitzträger in seiner waagerechten oder Sitzstellung noch zusätzlich über schräg verlaufende Stangen, die ebenfalls in den Führungsgliedern gleiten, abgestützt werden. Bei ausreichenden Platzverhältnissen ist dies eine brauchbare Lösung, die sich aber nicht auf landwirtschaftliche Fahrzeuge übertragen läßt, da dort die Platzverhältnisse im Bereich des Fahrersitzes, wo der erfindungsgemäße Fahrzeugsitz in der Regel angeordnet wird, äußerst beengt sind.

Der Erfindung liegt die Aufgabe zugrunde, einen den bestehenden Sicherheitserfordernissen Rechnung tragenden Fahrzeugsitz in einfacher Weise so auszubilden, daß er auf engstem Raum aus seiner waagerechten Sitzstellung in eine Nichtgebrauchslage verschwenkbar ist.

Diese Aufgabe ist gemäß der Erfindung dadurch gelöst worden, daß der Sitzträger nach Lösen der Sicherung auf der fahrzeugfesten Stange in seiner waagerechten Stellung verschiebbar ist und die Stange in der waagerechten Stellung des Sitzträgers den Sitzträger zwischen den Enden der Führungsglieder abstützt.

Auf diese Weise ist es möglich, den Fahrzeugsitz auf engstem Raum zu klappen, ohne daß platzgreifende Abstützstangen erforderlich sind, wobei sowohl in der waagerechten wie auch in der senkrechten Stellung des Fahrersitzes der einzige Platz fast nur von dem Sitzträger beansprucht wird.

Um ein ungewolltes Verschwenken aus der Sitzstellung zu vermeiden, kann nach der Erfindung der Sitzträger mindestens einen Haltestift aufweisen, der in der waagerechten Stellung in eine fahrzeugfeste Bohrung einrastbar ist. Dabei kann natürlich im Rahmen der Erfindung der Haltestift fahrzeugfest und die Bohrung am Sitzträger vorgesehen sein. Zweckmäßig sind zwei fahrzeugfeste Bohrungen vorgesehen, von denen eine langlochartig erweitert ist.

Hierbei können nach einem weiteren erfindungsgemäßen Vorschlag die fahrzeugfesten Bohrungen und die fahrzeugfesten Stangen in einem mit einer Kabinenwand verbundenen Unterbau vorgesehen sein.

Vorteilhaft können bei einem Fahrzeugsitz, bei dem die fahrzeugfeste Stange in den freien Enden von fahrzeugfesten Wangen angeordnet ist, die der Stange abgelegenen Enden der Wangen durch ein in der waagerechten Stellung zu dem Sitzträger ausgerichtetes Profilteil miteinander verbunden sein, wobei das Profilteil als Anschlag für den Sitzträger in der waagerechten Stellung ausgebildet ist und der Abstand der Stange zum Anschlag etwa ein Drittel bis zwei Fünftel der Sitzbreite beträgt.

Um ein unbeabsichtigtes Verschwenken aus der Sitzstellung mit Sicherheit auszuschließen, ist der Sitzträger mit einer Verriegelungsvorrichtung versehen, wobei die Verriegelungsvorrichtung als eine an der Unterseite des Sitzträgers vorgesehene und in den Längsschlitz zwischen den Führungsgliedern ragende Nase ausgebildet ist, die mit einer Ausnehmung in der Stange zusammenwirkt.

Vorteilhaft kann der Nasenrücken der Nase zu den der Stange abigelegenen Enden der Wangen weisen und der untere Steg der Führungsglieder ausbiegbar ausgebildet sein.

Zweckmäßig ist das den fahrzeugfesten Enden der Wangen abgelegene Ende des Längsschlitzes in den Führungsgliedern dem im Bereich der Aussparung der Stange verbleibenden Restprofil angepaßt.

Im folgenden ist die Erfindung anhand eines Ausführungsbeispiels näher erläutert, aus dem sich weitere Vorteile und Merkmale der Erfindung ergeben.

In der zugehörigen Zeichnung zeigt

Fig. 1 den Fahrzeugsitz in perspektivischer Gesamtansicht;

Fig. 2 eine perspektivische Ansicht des Fahrzeugsitzes in anderer Ausführungsform kurz vor Arretierung in Gebrauchsposition;

Fig. 3 einen senkrechten Schnitt durch den in Fig. 2 gezeigten, gegen Verschwenken gesicherten Sitzträger;

Fig. 4 einen senkrechten Schnitt durch den Fahrzeugsitz gemäß Fig. 1 quer zur Anschlagkante des Unterbaues bzw. der Kabinenseitenwand;

Fig. 5 einen senkrechten Schnitt durch den Sitzträger gemäß Fig. 1 und 4 parallel zum Anschlag des Unterbaues bzw. der Kabinenseitenwand;

Fig. 6 und 6b ein Detail aus Fig. 4 betreffend die Arretierung (6) und Entarretierung (6b) an der Stange;

Fig. 7 einen senkrechten Schnitt durch den Fahrzeugsitz gemäß Fig. 1 und 4 bis 6 in der Nichtbedarfsposition;

Fig. 8 ein Detail aus Fig. 7 in Zwischenposition.

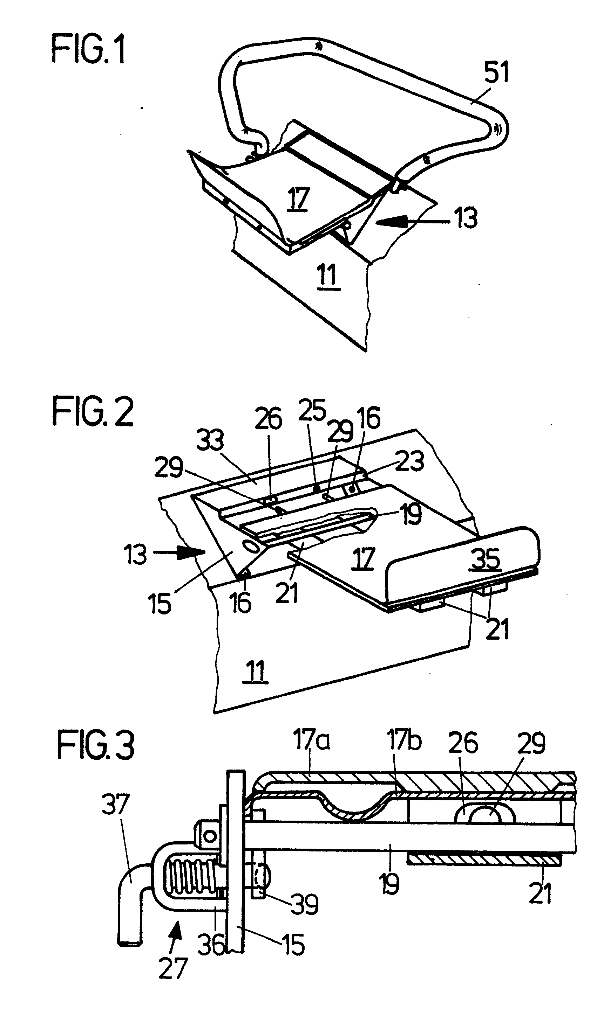

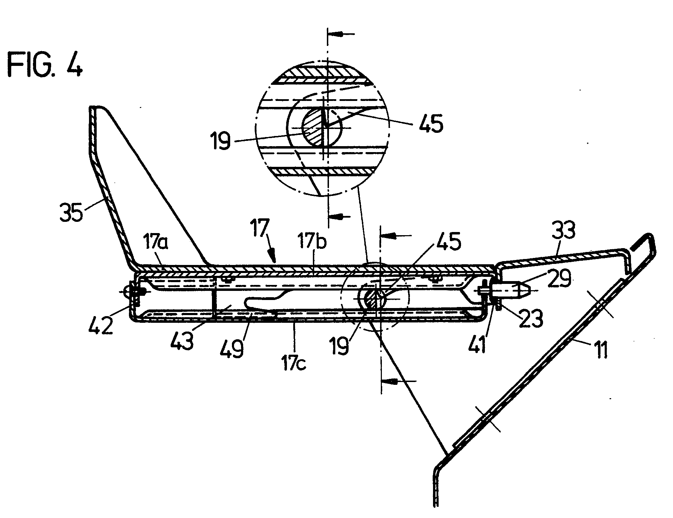

Fig. 1 zeigt in einer perspektivischen Darstellung einen Sitzträger 17 in Gebrauchsposition neben einem Unterbau 13, der seinerseits wieder auf einer Kabinenwand 11 bzw. einer Radabdeckung aufgebracht ist. Die Perspektive entspricht etwa derjenigen eines am Lenkrad stehenden Betrachters mit Blick nach hinten bzw. halb zur Seite. Wie gezeigt, kann es sich empfehlen, im Bereich des Sitzes, insbesondere zum Kabinenfenster hin, einen Haltebügel 51 anzubringen. Soweit Einzelheiten erkennbar sind, entsprechen diese der Ausführung gemäß Fig. 4 bis 7.

Fig. 2 zeigt einen Beifahrerklappsitz in etwas anderer Ausführungsform bezüglich Führung und Arretierung. Dargestellt ist die Stellung des Sitzträgers kurz vor Arretierung in Gebrauchsposition oder kurz nach Entarretierung aus der Gebrauchsposition.

Die Kabinenwand 11 verläuft im hier angenommenen Fall im Bereich des Unterbaues 13 nicht senkrecht, sondern geneigt, wie es z. B. im Bereich des Radkastens eines Schleppers der Fall ist. Der Unterbau 13 weist zwei Wangen 15 auf, wobei die hintere weitgehend verdeckt ist. Die beiden Wangen 15 können aus 6 mm starkem Stahlblech gebildet sein und mittels einer unteren Abkantung 16 auf das Blech des Radinnenkastens aufgeschraubt werden. Sie nehmen eine Stange 19, die aus einem 10 mm starken Rundstahl hergestellt sein kann, auf. An den Sitzträger 17 sind Führungsglieder 21 angeschweißt, die die Stange 19 derart untergreifen, daß der Sitz nach Verlassen von Bohrungen 25 und Lösen einer Sicherung 27 um die Stange sowohl schwenkbar als auch insbesondere in Richtung der Sitzbreite verschiebbar ist. Der Sitzträger 17 (Fig. 3) ist zweckmäßigerweise aus einem Stahlblech 17b mit darüberliegender Kunststoffplatte 17a gefertigt, wobei das Stahlblech im Randbereich abgekantet ist. Mit dem Stahlblech sind die ebenfalls aus Stahlblech bestehenden Führungsglieder 21 verschweißt.

Die beiden Wangen 15 sind durch ein Profilteil 33 miteinander verbunden, das im Falle der gezeigten Ausführungsbeispiele so ausgebildet ist, daß es zugleich einen Teil der Sitzfläche bilden kann und daß eine vordere Abkantung als Anschlag 23 dient. Zur Arretierung gegen Verschwenken des Sitzträgers 17 in Sitzposition dienen zwei im Anschlagbereich angebrachte Haltestifte 29, die in entsprechende Bohrungen 25, 26 passen. Der Sitzträger 17 ist ferner in seinem vorderen Bereich mit einer Aufkantung 35 versehen, um dem Beifahrer einen Seitenhalt gegen Verrutschen zu gewähren. Im weggeklappten Zustand des Beifahrersitzes kann die Aufkantung 35 gegebenenfalls auf einem Teil des Unterbaues 13 aufliegen, während der waagrechte eigentliche Sitzbereich senkrecht entlang der unteren Kabinenwandung nach unten zeigt.

Fig. 3 zeigt einen senkrechten Schnitt durch den Sitzträger 17 in waagrechter ausgeklappter Gebrauchsposition. Der Schnitt erfolgt parallel zur Stange 19. Es handelt sich um die Ausführungsform, die in Fig. 2 in perspektivischer Ansicht gezeigt ist. Der Sitzträger 17 ist zweiteilig aufgebaut und zwar aus der Kunststoffplatte 17a und dem darunterliegenden Stahlblech 17b. Als Führungsglieder 21 dienen Blechlaschen. Man sieht eine solche Lasche unterhalb der Stange 19 im Schnitt und ferner die Aufkantung dieser Lasche zum Trägerblech hin sowie im Gegensatz zu Fig. 2 die in der Lasche befindliche, als Langloch ausgebildete Bohrung 26 und den vom Anschlag 33 herkommenden Haltestift 29. In Fig. 2 ist die Lage der Bohrungen 25, 26 und Haltestifte 29 umgekehrt, was im allgemeinen die günstigere, und zwar besser sichtbare Handhabung ermöglicht. Weiterhin sieht man in Fig. 3 die Sicherung 27, welche im vorliegenden Falle einen auf eine Wange 15 aufgeschweißten Bügel 36 zur Führung eines Bolzens 37 aufweist, der Bügel 36 und Wange 15 durchdringt und eine an der Unterseite des Sitzträgers 17 angebrachte Lochlasche 39. Bei Eingriff des Bolzens 37 in die Lochlasche ist die Sitzplatte sowohl gegen Verschieben als auch gegen Verschwenken gesichert.

Fig. 4 zeigt einen senkrechten Schnitt durch den in Gebrauchsposition arretierten Fahrzeugsitz in einer bevorzugten Ausführungsvariante. Der Schnitt verläuft quer zum Anschlag 23 bzw. zur Kabinenwand 11 und im wesentlichen in Höhe der Haltestifte 29. Die Stange 19 ist im Bereich einer Ausnehmung 19a geschnitten.

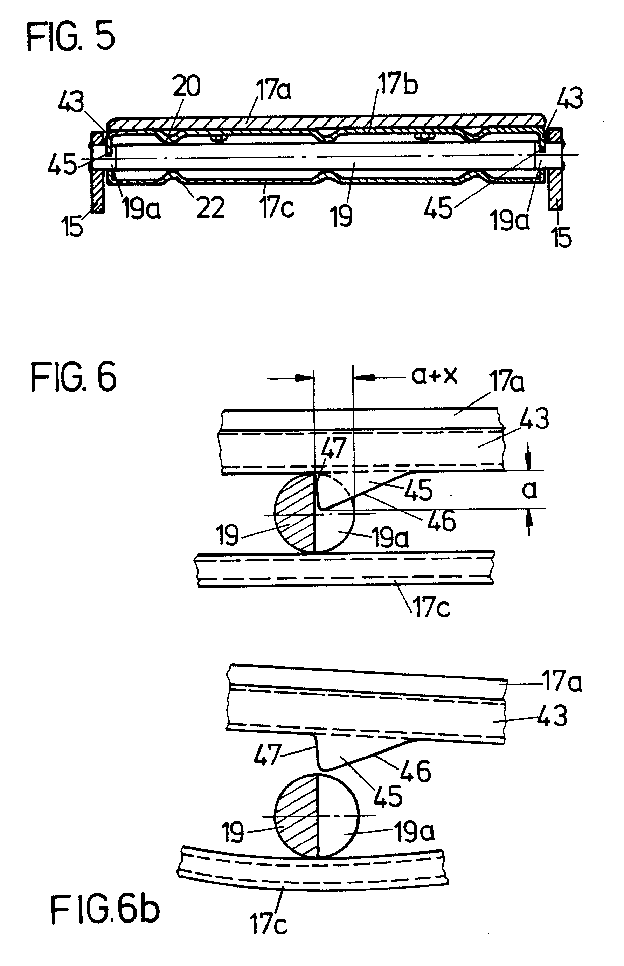

In diesem Falle ist der Sitzträger 17 dreiteilig ausgebildet, seine Kunststoffplatte mit 17a bezeichnet und seine Aufkantung zur Sicherung des Beifahrers gegen Verrutschen zum Fahrer hin mit 35. Man erkennt die Abkantung des Sitzträgers und eine integrierte Nase 45 sowie einen Haken 49 mit Schlitz. Ein unterer Steg 17c, der in seiner Wirkung den Führungsgliedern 21 entspricht, ist an der anschlagseitigen Abkantung 41 und an der gegenüberliegenden Abkantung 42 des Sitzträgers 17 befestigt und kann quer zur Stange 19 etwas durchfedern, und zwar um den Betrag a, wie es in Fig. 6 gezeigt ist.

Die gleiche Ausführungsform wie in Fig. 4 ist in Fig. 5 gezeigt, und zwar gemäß der in Fig. 4 eingetragenen Schnittebene parallel zur Stange 19, die in dieser Ausführungsform als Rundstab ausgebildet ist.

Fig. 6 zeigt ein Detail aus Fig. 4. Die Tiefe der Ausnehmung 19a ist auf die Nase 45 abgestimmt. Mit 46 ist der flacher, mit 47 der steiler ansteigende Nasenrücken bezeichnet. Die Ausnehmung 19a besitzt in horizontaler Richtung eine Tiefe von a + x, wobei x in der Größenordnung von einigen Zehntel mm liegt.

Fig. 6 zeigt den arretierten Zustand, Fig. 6b zeigt den leicht gekippten Sitzträger im Moment der Entarretierung.

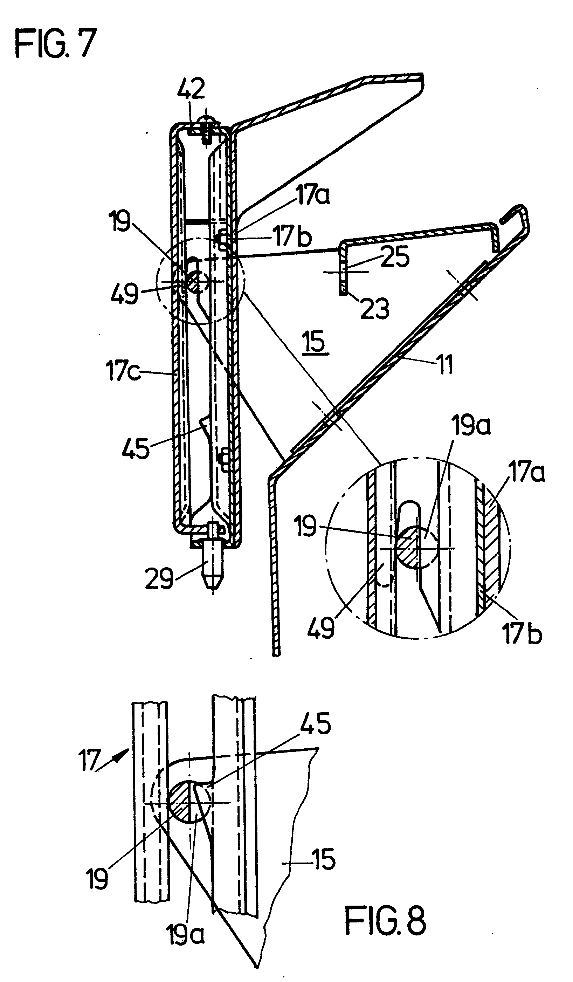

Fig. 7 betrifft dieselbe in den Fig. 4 bis 6 dargestellte Ausführungsform, in ihrer weggeklappten, in Nichtbedarfsposition befindlichen Stellung.

Zu Material und Bemaßung dieser besonders vorteilhaften Ausführungsform gemäß Fig. 4 bis 7 ist im einzelnen auszuführen:

Bei der Kunststoffplatte 17a kann es sich vorzugsweise um eine im Spritzgußverfahren hergestellte GFK-Kunststoffschale in einer Dicke von 3 mm bis 6 mm handeln. Das Stahlblech 17b hat vorzugsweise eine Stärke von 2 bis 3 mm und ist mit allseitigen Abkantungen 41, 42, 43 oder Laschen in gleicher Wandstärke versehen. Der untere Steg 17c, der einerseits der Führung gegenüber der Stange 19, andererseits Sicherheitserfordernissne dient, kann vorteilhafterweise aus elastischem schlagfestem Kunststoff, wie z. B. ABS-Mischpolymerisat hergestellt sein in einer Dicke von z. B. 2 bis 4 mm. Die Kunststoffplatte 17a kann auf das Stahlblech 17b mittels integrierter Schraubenbolzen aufgebracht werden, während der untere Steg 17c z. B. mittels Blechschrauben an dem Stahlblech 17b nur an dessen Abkantungen 41 und 42 befestigt ist, um eine Elastizität quer zur Stange 19 aus Führungs- und Entarretierungsgründen sicherzustellen. Der oder die Haltestifte 29 können mit der zugehörigen Abkantung verschweißt sein und einen Durchmesser von ca. 8 bis 12 mm aufweisen. Die Stange 19 ist im Falle dieser Ausführungsform ein Rundstab mit einem Durchmesser von 8 mm bis 15 mm, der Ausnehmungen 19a aufweist im Bereich der beiden seitlichen Abkantungen 43. Bei einer Stärke des Stahlblechs bzw. der Abkantungen 43 von 2 bis 6 mm sollte die axiale Abmessung der Ausnehmung 19a also geringfügig mehr betragen. Die Tiefe der Ausnehmung sollte wie in Fig. 6 angedeutet mindestens der Höhe a des Höckers der Nase 45 entsprechen. Im allgemeinen ist a = 4 bis 5 mm.

Im folgenden soll nun die Funktionsweise der Ausführungsform gemäß den Fig. 4 bis 8 näher beschrieben werden:

In der in Fig. 4 gezeigten Position ist der als Beifahrerklappsitz ausgebildete Fahrzeugsitz hauptsächlich durch die Stange 19 gestützt und weiterhin durch die beiden Haltestifte 29 bzw. das Profilteil 33, das entsprechend kräftig ausgebildet sein sollte. Gegen Verschieben des Sitzes in Richtung Kabinenwand 11 wirkt der Anschlag 23, wobei der Abstand der Stange 19 zum Anschlag 23 etwa ein Drittel bis zwei Fünftel der Sitzbreite beträgt. Gegen ein Verschieben des Sitzes in umgekehrter Richtung, weg von der Kabinenwand, arretiert die Nase 45, deren steilerer Nasenrücken 47 gegen die vertikal verlaufende Kante der Ausnehmung 19a anliegt (vgl. Fig. 6). Unter dem Einfluß des Gewichtes des Beifahrers ist ein Entarretieren weg vom Anschlag 23 ausgeschlossen. Auch ein Verschwenken des Sitzes um die Stange 19 ist wegen der Arretierung durch die Haltestifte 29 — wie ohne weiteres ersichtlich — ausgeschlossen.

Will man nun den Fahrzeugsitz in Nichtbedarfsstellung bringen, so hebt man ihn zunächst, z. B. durch Hochziehen an der Aufkantung 35 etwas nach oben an gegen die Vorspannung des unteren Steges 17c. Dieser muß elastisch etwa um den Betrag a (vgl. hierzu auch Fig. 6) nach unten nachgeben. Sodann gleitet der Höcker der Nase 45 über die Kante der Stange 19 weg und die Haltestifte 29 lassen sich aus den Bohrungen 25, 26 herausziehen, wonach nun ein Verschwenken um die Stange 19 möglich wird. Nach Verschwenken auf etwa vertikale Position läßt man nun den entriegelten Fahrzeugsitz nach unten gleiten, bis der Haken 49 und der zugehörige Schlitz für eine Arretierung des Klappsitzes in etwa vertikaler Nichtbedarfsposition sorgen. Hierbei korrespondiert Haken 49 bzw. Form des Schlitzes mit der Ausnehmung 19a bzw. dem verbleibenden Profil der Stange 19. Die etwa vertikale Kante der Ausnehmung 19a und die Verengung des Schlitzes andererseits sichern auch während der Fahrt eine gute Arretierung ohne Flattern und Geräuschbildung des Sitzes.

Durch die gewählte, auch in Fig. 8 deutlich werdende Ausnehmung 19a der Stange 19 ist sichergestellt, daß der Sitzträger 17 in bezug auf seine Bewegung in vertikaler Richtung nicht durch die Nase 45 behindert wird. Soll der Sitzträger aus der Nichtbedarfsposition in die Gebrauchsposition gebracht werden, so wird der Sitzträger aus Haken 49 und Schlitz zunächst nach oben herausgezogen bis über die Nase 45, dann in waagerechte Position geschwenkt und mit leichtem Druck entlang des flacheren Nasenrückens 46 der Nase in Arretierungsposition gebracht. Es versteht sich, daß die Lage der Nase 45 in ihre Entfernung von der Abkantung 41 bzw. dem Anschlag 23 auf die Position der Stange 19 abzustimmen ist.

Beim Verschieben und Verschwenken des Sitzträgers 17 gegenüber der Stange 19 spielen bei der hier in Rede stehenden Ausführungsform Sicken 20 des Stahlblechs 17b bzw. mit diesen korrespondierende Sicken 22 des unteren Steges 17c als Führungselement eine Rolle. Ihr lichter Abstand entspricht etwa dem Durchmesser der Stange 19. Die Lage des Hakens 49 kann so gewählt werden, daß die Aufkantung 35 etwa auf dem Profilteil 33 aufliegt, wenn die Bodenfreiheit dies zuläßt, oder aber auch eine höhere Position einnimmt. Selbstverständlich ist es möglich, in der vertikalen Position ein Verrasten der Haltestifte 29 in einen entsprechendes kabinenbodennahes Element vorzusehen, doch ist dies nicht notwendig.

Die vorstehende Beschreibung dürfte deutlich gemacht haben, daß hiermit eine besonders zweckmäßige, robuste den Sicherheitsvorschriften auch bei rauhem Fahrbetrieb genügende Lösung gefunden worden ist, deren Einsatz insbesondere bei Ackerschleppern und dergleichen zweckmäßig ist. Im dortigen Bereich ist bekanntlich die Breite der Fahrerkabine wegen bestimmter Erfordenisse der Spurweite begrenzt. Dementsprechend begrenzt sind die Platzverhältnisse in der Fahrerkabine. Will man dem Fahrer dennoch einen Komfortsitz zur Verfügung stellen mit entsprechender Breite und Armlehnen, so ist es für die Anbringung eines Beifahrerklappsitzes gemäß der Erfindung zweckmäßig und unter bestimmten Platzverhältnissen sogar notwendig, die auf der entsprechenden Seite befindliche Armlehne des Fahrersitzes voll absenkbar auf die Höhe der Sitzfläche auszugestalten. Eine solche Ausgestaltung ist nicht Gegenstand der Erfindung und als solche bereits bekannt.

Der Beifahrerklappsitz gemäß der Erfindung ist nicht nur für Landmaschinen, sondern z. B. auch für Baumaschinen und dergleichen einsetzbar. Die Fahrkabine kann voll oder halb geschlossen ausgebildet sein.

**Patentansprüche**

1. Fahrzeugsitz, insbesondere für landwirtschaftliche Fahrzeuge, mit einer fahrzeugfesten Stange (19), die den Sitzträger (17) in mit diesem verbundenen Führungsgliedern (21, 17c) führt, um die der Sitzträger aus seiner waagerechten Stellung in eine senkrechte Stellung klappbar ist und die den Sitzträger in seiner waagerechten und gegen Klappen in die senkrechte Stellung gesicherten Stellung teilweise abstützt, dadurch gekennzeichnet, daß der Sitzträger (17) nach Lösen der Sicherung (27, 45) auf der fahrzeugfesten Stange (19) in seiner waagerechten Stellung verschiebbar ist und die Stange (19) in der waagerechten Stellung des Sitzträgers (17) den Sitzträger (17) zwischen den Enden der Führungsglieder abstützt.

2. Fahrzeugsitz nach Anspruch 1, dadurch gekennzeichnet, daß der Sitzträger (17) mindestens einen Haltestift (29) aufweist, der in der waagerechten Stellung in eine fahrzeugfeste Bohrung (25, 26) einrastbar ist.

3. Fahrzeugsitz nach Anspruch 2, dadurch gekennzeichnet, daß zwei fahrzeugfeste Bohrungen (25, 26) vorgesehen sind, von denen eine langlochartig erweitert ist.

4. Fahrzeugsitz nach einem oder mehreren der vorhergehenden Ansprüche, dadurch gekennzeichnet, daß die fahrzeugfesten Bohrungen (25, 26) und die fahrzeugfeste Stange (19) in einem mit einer Kabinenwand (11) verbundenen Unterbau (13) vorgesehen sind.

5. Fahrzeugsitz nach einem oder mehreren der vorhergehenden Ansprüche, wobei die fahrzeugfeste Stange in den freien Enden von fahrzeugfesten Wangen angeordnet ist, dadurch gekennzeichnet, daß die der Stange (19) abgelegenen Enden der Wangen (15) durch ein in der waagerechten Stellung zu dem Sitzträger (17) ausgerichtetes Profilteil (33) miteinander verbunden sind.

6. Fahrzeugsitz nach Anspruch 5, dadurch gekennzeichnet, daß das Profilteil (33) als Anschlag (23) für den Sitzträger (17) in der waagerechten Stellung ausgebildet ist und der Abstand der Stange (19) zum Anschlag (23) etwa ein Drittel bis zwei Fünftel der Sitzbreite beträgt.

7. Fahrzeugsitz nach einem oder mehreren der vorhergehenden Ansprüche, dadurch gekennzeichnet, daß der Sitzträger (17) mit einer Verriegelungsvorrichtung versehen ist.

8. Fahrzeugsitz nach einem oder mehreren der vorhergehenden Ansprüche, dadurch gekennzeichnet, daß die Verriegelungsvorrichtung (27) als eine an der Unterseite des Sitzträgers (17) vorgesehene und in den Längsschlitz zwischen den Führungsgliedern ragende Nase (45) ausgebildet ist, die mit einer Aussparung (19a) in der Stange (19) zusammenwirkt.

9. Fahrzeugsitz nach einem oder mehreren der vorhergehenden Ansprüche, dadurch gekennzeichnet, daß der Nasenrücken (46) der Nase (45) zu den der Stange (19) abgelegenen Enden der Wangen (15) weist und der untere Steg (17c) der Führungsglieder ausbiegbar ausgebildet ist.

10. Fahrzeugsitz nach einem oder mehreren der vorhergehenden Ansprüche, dadurch gekennzeichnet, daß das den fahrzeugfesten Enden der Wangen (15) abgelegene Ende des Längsschlitzes in den Führungsgliedern dem im Bereich der Aussparung (19a) der Stange verbleibenden Restprofil angepaßt ist.

**Claims**

1. A vehicle seat, in particular for agricultural vehicles, comprising a bar (19) which is fixed with respect to the vehicle and which guides the seat carrier (17) in guide members (21, 17c) connected thereto, about which the seat carrier can be tilted from its horizontal position into a vertical position, and which partially supports the seat carrier in its horizontal position in which it es secured against tilting movement into the vertical position, characterised in that after release of the securing means (27, 45), the seat carrier (17) is displaceable on the bar (19) which is fixed to the vehicle, in its horizontal position, and the bar (19), in the horizontal position of the seat carrier (17), supports the seat carrier (17) between the ends of the guide members.

2. A vehicle seat according to claim 1 characterised in that the seat carrier (17) comprises at least one holding pin (29) which in the horizontal position can engage into a bore (25, 26) which is fixed with respect to the vehicle.

3. A vehicle seat according to claim 2 characterised in that there are two bores (25, 26) which are ixed with respect to the vehicle, one of which is enlarged in a slot-like configuration.

4. A vehicle seat according to one or more of the preceding claims characterised in that the bores (25, 26) which are fixed with respect to the vehicle and the bar (19) which is fixed with respect to the vehicle are disposed in a substructure (13) which is joined to a cab wall (11).

5. A vehicle seat according to one or more of the preceding claims wherein the bar which is fixed with respect to the vehicle is arranged in the free ends of side plate members which are fixed with respect to the vehicle, characterised in that the ends of the side plate members (15) which are remote from the bar (19) are connected together by a shaped member (33) which is aligned in the horizontal position with respect to the seat carrier (17).

6. A vehicle seat according to claim 5 characterised in that the shaped member (33) is formed as an abutment (23) for the seat carrier (17) in the horizontal position and the spacing of the bar (19) from the abutment (23) is about one third to two fifths of the width of the seat.

7. A vehicle seat according to one or more of the preceding claims characterised in that the seat carrier (17) is provided with a locking means.

8. A vehicle seat according to one or more of the preceding claims characterised in that the locking means (27) is formed as a projection (45) which is disposed at the underside of the seat carrier (17) and which projects into the longitudinal slot between the guide members and which co-operates with a recess (19a) in the bar (19).

9. A vehicle seat according to one or more of the preceding claims characterised in that the back (46) of the projection (45) faces towards the ends of the side plate members (15) that are remote from the bar (19) and the lower web portion (17c) of the guide members is capable of being deflected.

10. A vehicle seat according to one or more of the preceding claims characterised in that the end of the longitudinal slot in the guide members, that is remote from the ends of the side plate members (15) that are fixed with respect to the vehicle, is adapted to the remaining configuration in the region of the opening (19a) of the bar.

**Revendications**

1. Siège de véhicule, en particulier pour véhicules utilisés en agriculture, comportant une barre (19) fixée sur le véhicule, qui assure la guidage du support de siège (17) dans des éléments de guidage (21, 17c) reliés à celui-ci, autour de laquelle le support de siège peut pivoter à partir de sa position horizontale jusque dans une position verticale, et qui soutient partiellement le support de siège dans sa position horizontale et verroillée d'une manière s'opposant à son basculement jusque dans la position verticale, caractérisé en ce que le support de siège (17) peut, après suppression du verrouillage (27, 45), coulisser sur la barre (19) fixée sur le véhicule dans sa position horizontale, et en ce que la barre (19) soutient le support de siège (17) entre les extrémités des éléments de guidage dans la position horizontale de ce support de siège (17).

2. Siège de véhicule suivant la revendication 1, caractérisé en ce que le support de siège (17) comporte au moins une broche de retenue (29) qui, dans la position horizontale, peut être engagée dans un perçage (25, 26) ménagé sur le véhicule.

3. Siège de véhicule suivant la revendication 2, caractérisé en ce qu'il est prévu deux perçages (25, 26) ménagés sur le véhicule, parmi lesquels l'un est élargi en forme de trou oblong.

4. Siège de véhicule suivant l'une quelconque des revendications précédentes, caractérisé en ce que les perçages (25, 26) ménagés sur le véhicule et la barre (19) fixée sur le véhicule sont prévus dans une infrastructure (13) reliée à une paroi (11) de la cabine de conduite.

5. Siège de véhicule suivant l'une quelconque des revendications précédentes, dans lequel la barre fixée sur le véhicule est disposée dans les extrémités libres de joues fixées sur le véhicule, caractérisé en ce que les extrémités des joues (15) opposées à la barre (19) sont reliées entre elles par un profilé (33) orienté dans la position horizontale par rapport au support de siège (17).

6. Siège de véhicule suivant la revendication 5, caractérisé en ce que le profilé (33) est réalisé sous la forme d'une butée (23) destinée au support de siège (17) dans la position horizontale, et en ce que la distance entre la barre (19) et la butée (23) représente environ $^1/_3$ à $^2/_5$ de la largeur du siège.

7. Siège de véhicule suivant l'une quelconque des revendications précédentes, caractérisé en ce que le support de siège (17) est muni d'un dispositif de verrouillage.

8. Siège de véhicule siuvant l'une qualconque des revendications précédentes, caractérisé en ce que le dispositif de verroillage (27) est réalisé sous la forme d'un bec ou ergot (45) prévu sur la face inférieure du support de siège (17) et faisant saillie dans la fente longitudinale ménagée entre les éléments de guidage, ce bec coopérant avec un évidement (19a) prévu dans la barre (19).

9. Siège de véhicule suivant l'une quelconque des revendications précédentes, caractérisé en ce que le dos (46) du bec (45) est orienté vers le extrémités des joues (15) opposées à la barre (19), et en ce que la branche inférieure (17c) des éléments de guidage est réalisée sous une forme flexible.

10. Siège de véhicule suivant l'une quelconque des revendications précédentes, caractérisé en ce que l'extrémité de la fente longitudinale ménagée dans les éléments de guidage opposée aux extrémités des joues (15) fixées sur le véhicule est adaptée au profil restant qui demeure présent dans la partie correspondant à l'évidement (19a) de la barre (19).

**FIG.1**

**FIG.2**

**FIG.3**

FIG. 4

FIG. 5

FIG. 6

a+x

FIG. 6b

# FIG. 7

# FIG. 8